# EUROPÄISCHE PATENTSCHRIFT

(11) **EP 3 597 143 B1**
(45) Veröffentlichungstag und Bekanntmachung des Hinweises auf die Patenterteilung: **07.07.2021**
(21) Anmeldenummer: 18183660.2
(22) Anmeldetag: 16.07.2018
(51) Int. Cl.: A61C 13/01, A61C 13/08, A61C 13/087, A61C 13/09, A61C 13/10, A61C 13/20

(54) **DENTALPROTHESE**
DENTAL PROSTHESIS
PROTHÈSE DENTAIRE

(43) Veröffentlichungstag der Anmeldung: 22.01.2020
(73) Patentinhaber: Ivoclar Vivadent AG, 9494 Schaan (LI)
(72) Erfinder: Geler, Markus, 39010 Tisens (IT); Frenzel, Frank, 9436 Balgach (CH); Baaske, Thomas, 8885 Mols (CH); Frei, Roger, 9435 Heerbrugg (CH)
(74) Vertreter: Baronetzky, Klaus

(56) Entgegenhaltungen:
- CN-A- 101 862 225
- US-A1- 2014 234 802
- US-A1- 2018 042 705
- US-A1- 2018 071 063

## Beschreibung

Die Erfindung betrifft eine Dentalprothese, gemäß dem Oberbegriff von Anspruch 1.

Es ist seit langem bekannt, Prothesen, aber auch Zähne, aus mehreren Schichten aufzubauen.

Als Beispiele hierfür seien die aus der WO 90/13268 A1 und aus der WO 91/07141 A1 bekannten Lösungen genannt.

Basierend auf diesen recht alten Lösungen sind in neuerer Zeit unter Zuhilfenahme der CAD/CAM-Technik auch mehrschichtige Kunststoffelemente vorgeschlagen worden, die der Erstellung von Zähnen und Prothesen zur Bereitstellung von Zähnen und der Prothesenbasis zur Bereitstellung einer fertigen Prothese dienen sollen. Aufgrund der unterschiedlichen Erfordernisse an die verschiedenen Materialien, nämlich des fleischfarbenen Prothesenbasismaterials einerseits und des zahnfarbenen Zahnmaterials andererseits hat sich dieser Vorschlag bislang nicht durchgesetzt, und zwar auch nicht, obwohl es bereits anderweitig bekannt geworden ist, sowohl Zähne als auch eine Prothesenbasis aus PMMA zu fertigen.

Ferner sind in neuerer Zeit Rapid-Prototyping-Verfahren vorgeschlagen worden, mit dem Ziel, sowohl Zähne als auch Prothesenbasen aus Kunststoffmaterial - oder gegebenenfalls auch aus anderen Materialien - bereitzustellen. Auch diese Entwicklung hat bis jetzt keine rechten Fortschritte erfahren.

Andererseits besteht in Hinblick auf die zunehmende Lebenserwartung eine zunehmende Nachfrage nach Voll- und Teilprothesen, wobei hier der Einfachheit halber unter dem Begriff Prothesen sowohl Voll- als auch Teilprothesen subsumiert werden. Dieser zunehmende Bedarf ist gepaart mit einem ebenfalls zunehmenden Kostendruck, bereits aufgrund der zu erwartenden sich erheblich steigernden Nachfrage.

Aus der EP 3 064 170 A1 ist es bekannt, die Grenzfläche zwischen den Materialien als sich strahlenförmig erstreckende Wellenform zu erstellen. Die Wellenform kann dann gleich die Kettenlinie des Gingivasaums abbilden.

Diese Version hat den Vorteil, dass unabhängig von der Größe des erforderlichen Zahnbogen stets gleichsam automatisch der Gingivasaum erzeugt wird, so dass mögliche Fehler insofern automatisch vermieden werden.

Versuche haben ergeben, dass gerade bei kleinen Dentalprothesen, die gemäß dieser Lösung hergestellt sind, die Kauleistung von den Patienten als unbefriedigend empfunden wird.

Patienten mit vergleichsweise großem Zahnbögen empfinden bei dieser Lösung teils ihre Frontzähne als etwas unförmig.

Demgegenüber liegt der Erfindung die Aufgabe zugrunde, eine Dentalprothese gemäß dem Oberbegriff von Anspruch 1 zu schaffen, die die bekannte Lösungen sowohl ästhetisch als auch funktional verbessert, ohne dass es zu wirtschaftlichen Nachteilen kommt.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, bei einer Dentalprothese zunächst einen zweifarbigen Rohling vorzusehen. Der Bereich, aus dem später der Zahnbogen geformt wird, ist zahnfarben, und der Bereich, aus dem später die Prothesenbasis geformt wird, ist fleischfarben.

Andererseits besteht in Hinblick auf die zunehmende Lebenserwartung eine zunehmende Nachfrage nach Voll- und Teilprothesen, wobei hier der Einfachheit halber unter dem Begriff Prothesen sowohl Voll- als auch Teilprothesen subsumiert werden. Dieser zunehmende Bedarf ist gepaart mit einem ebenfalls zunehmenden Kostendruck, bereits aufgrund der zu erwartenden sich erheblich steigernden Nachfrage.

Aus der EP 3 064 170 A1 und zugleich aus der US 2018 071 063 A1 ist es bekannt, die Grenzfläche zwischen den Materialien als sich strahlenförmig erstreckende Wellenform zu erstellen. Die Wellenform kann dann gleich die Kettenlinie des Gingivasaums abbilden.

Diese Version hat den Vorteil, dass unabhängig von der Größe des erforderlichen Zahnbogen stets gleichsam automatisch der Gingivasaum erzeugt wird, so dass mögliche Fehler insofern automatisch vermieden werden.

Versuche haben ergeben, dass gerade bei kleinen Dentalprothesen, die gemäß dieser Lösung hergestellt sind, die Kauleistung von den Patienten als unbefriedigend empfunden wird.

Patienten mit vergleichsweise großem Zahnbögen empfinden bei dieser Lösung teils ihre Frontzähne als etwas unförmig.

Demgegenüber liegt der Erfindung die Aufgabe zugrunde, eine Dentalprothese gemäß dem Oberbegriff von Anspruch 1 zu schaffen, die die bekannte Lösungen sowohl ästhetisch als auch funktional verbessert, ohne dass es zu wirtschaftlichen Nachteilen kommt.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, bei einer Dentalprothese zunächst einen zweifarbigen Rohling vorzusehen. Der Bereich, aus dem später der Zahnbogengeformt wird, ist zahnfarben, und der Bereich, aus dem später die Prothesenbasis geformt wird, ist fleischfarben.

wird der Zahnbogen etwas weiter radial außen, also in vestibulärer Richtung verlagert, gefräst, und bei kleinen Zahnbögen wird dieser weiter innen, also nach oral verlagert, gefräst.

Durch die erfindungsgemäße Parallelisierung der Berge und Täler der Grenzfläche für den Bereich der Molaren steht auch bei kleinen Zahnbögen erfindungsgemäß eine vergleichsweise große Kaufläche zu Verfügung.

Es hat sich gezeigt, dass gerade die oralen Stampfhöcker für die Kaueffizienz wichtig sind, und gerade deren Ausformung mit guter Ausprägung ermöglicht die erfindungsgemäße Grenzfläche. Verglichen mit der vestibulären Seite steht auf der oralen Seite für jeden Zahn die gleiche Breite in mesial-distaler Richtung zur Verfügung, so dass sich ein massiver Stampfhöcker dort gut unterbringen lässt.

Hinzu kommt, dass von der Ästhetik her die Frontzähne prägend sind. Bei kleinen Zahnbögen für schmale Gesichtsformen und schmale Münder kann erfindungsgemäß ohne weiteres auch ein radial einwärts, also nach oral verlagerter Zahnbogen gefräst werden, der dementsprechend schmale Frontzähne ergibt.

Dennoch ist die Kaufunktion im Molarenbereich wie vorstehend erläutert in ausreichendem Maße gegeben .

In vorteilhafter Ausgestaltung der Erfindung kann im Bereich der Prämolaren und/oder der Eckzähne die Parallelität der Nuten und Rippen in Richtung Strahlenform überführt werden.

Beispielsweise können die Einser und Zweier strahlenförmige Nuten und Rippen mit einem echten Strahlmittelpunkt haben. Dieser wird von der Dreier-Rippe jedoch nicht mehr richtig getroffen. Die betreffende Rippe ist dann weniger strahlenförmig und paralleler zur benachbarten Zweier-Rippe.

Dies gilt auch für die Vierer-Rippe, die wiederum einen Verlauf hat, der der Parallelität noch stärker angenähert ist.

Die nächstfolgenden Rippen, also die Fünfer, die Sechser und die Siebener, sind zueinander vollständig parallel.

In weiterer vorteilhafter Ausgestaltung ist es vorgesehen an, dass sich der teils strahlenförmige teils parallele Verlauf der Nuten und Rippen, also Täler und Berge, nicht von der oralen Mitte bis zum vestibulären Außenrand erstreckt, sondern lediglich über einen Zahnformungsbereich, der eine oral-vestibuläre Erstreckung von beispielsweise 2 cm hat.

In diesem Bereich ist es vorgesehen, dass der Zahnbogen gefräst wird.

Bei dieser Ausführungsform ist es auch ausreichend, das zahnfarbene Material lediglich in diesem Bereich vorzusehen. Das fleischfarbene Material ist dann im gesamten übrigen Rohling vorgesehen.

Der Formgebungsbereich ist jedenfalls im Wesentlichen U-förmig, also verläuft wie ein U mit recht breiten Schenkeln .

Der erfindungsgemäße Rohling kann scheibenförmig sein, beispielsweise flachzylindrisch mit einem vorspringenden Einspannrand und einem Durchmesser zwischen 95 und 100 mm.

Es ist aber auch eine beliebige andere Form möglich, beispielsweise auch eine Zahnbogenform des Rohlings oder eine Dreiecksform.

Bevorzugt sind die Täler der Grenzfläche an die Breite des zu erzeugenden Zahnes angepasst. Insbesondere kann das Tal für den ersten Molar die größte Talbreite haben.

Sowohl im Frontzahnbereich als auch im übrigen Zahnbereich haben die Berge und Täler innerhalb des Formgebungsbereichs eine kongruente Form.

Die Berge und/oder die Täler können an ihren Spitzen mit einer Kammlinie verbunden werden, die entweder gerade oder gekrümmt, beispielsweise auch S-förmig gekrümmt, verlaufen kann.

Es ist vorgesehen, über einen Scan des Patienten-Mundes oder bei Bedarf auch über eine Abformung eine passende Zahnbogengröße festzustellen und basierend hierauf die Zielgröße des Zahnbogen durch Festlegung der Formungslinie innerhalb des Formgebungsbereichs festzulegen. Die Formungslinie erstreckt sich bei kleineren Zielgrößen oraler und bei größeren Zielgrößen vestibulärer.

Insofern wird bei einem System, das nicht Teil der Erfindung ist, in beiden horizontalen Richtungen ausgewählt und festgelegt, an welcher Stelle der Zahnbogen herausgefräst werden soll.

In vorteilhafter Ausgestaltung ist ein System zur Herstellung einer Dentalprothese basierend auf einem Prothesenrohling vorgesehen. Die Rohlingherstellung erfolgt in einer hierzu geeigneten Vorrichtung, z.B. durhc Spritzgießen. Bei dieser Ausführungsform weisen die Rohlinge mindestens eine Referenzmarkierung an oder mit Bezug auf die Grenzfläche real oder virtuell auf.

Die Grenzfläche ist also unmittelbar markiert oder zumindest in den CAM/CAD-Daten Die Fräsmaschine liest die Referenzmarkierung entnimmt dieser die Grenzen, bis zu denen das zahnfarbene und das fleischfarbene Materiel zu fräsen ist.

Dei einem weiteren vorteilhaften System Herstellung einer Dentalprothese ist eine Speichervorrichtung vorgesehen. Diese ist in einer CAD/CAM-Vorrichtung angeordnet ist oder die CAD/CAM-Vorrichtung greift auf die Speichervorrichtung zu,
Die Geometrie jedes Rohlings, insbesondere auch die Erstreckung der Grenzfläche im Raum, ist dort abgespreichert. In der Speichervorrichtung ist ferner eine Zahnbibliothek hinterlegt. Die CAD/CAM-Vorrichtung oder ein sonstiger Computer macht einen Vorschlag für die Aufstellung der Zähne auf dem fleischfarbenenen Material, also der späteren Prothesenbasis.

Dieser ist aber noch per Benutzereingriff änderbar. Es ist dabei auch möglich, dass die CAD/CAM-Vorrichtung die Änderungen des Benutzers erfasst und bei der Erstellung von neuen Aufstellvorschlägen berücksichtigt. Dies wird als Deep Learning bezeichnet.

In vorteilhafter Ausführungsform ist eine zusätzliche Schicht aus einem Material mit abweichenden lichtbrechenden Eigenschaften, insbesondere aufgrund unterschiedlicher Brechungsindices dieses Materials gegenüber dem fleischfarbenen und dem zahnfarbenen Material, zwischen dem zahnfarbenen und dem fleischfarbenen Material angeordnet. Diese Eigenschaften werden durch enthaltene organische und/oder anorganische Bestandteile begünstigt, welche zur Veränderung der Transparenz respektive Opazität der Schicht führen. Bevorzugt sind sie radikalisch polymerisierbar, insbesondere thermisch oder lichtinitiiert, und werden zusammen mit den Materialien thermoplastisch verarbeitet und zwischen den Materialien eingebracht.

Hierdurch entsteht eine Opakerschicht, insbesondere aus einem organischen Opaker, bevorzugt aus einem lichthärtenden Opaker, an der Gernzfläche zwischen den Materialien ausgebildet. Diese verhindert, dass die Fleischfarbe des Basismaterials in das hellere Zahnmaterial einscheint und so die natürliche Anmutung verfälscht. Ein etwaiger graustichig wirkenden Zahnfleischsaum wird vermieden, und das Chroma des gingiva- bzw. zahnfarbenen Materials wird nicht nachteilig beeinflußt.

Weitere Vorteile, Einzelheiten und Merkmale ergeben sich aus der nachfolgenden Beschreibung eines Ausführungsbeispiels der Erfindung anhand der Zeichnungen.

Es zeigen:
- Fig. 1: eine Unteransicht auf einen zu erstellenden Zahnbogen in einer erfindungsgemäßen Rohlingscheibe;
- Fig. 2: eine Draufsicht auf den Zahnbogen gemäß Fig. 1, ebenfalls unter Darstellung des Prothesenrohlings;
- Fig. 3: eine schematische perspektivische Ansicht eines erfindungsgemäßen Prothesenrohlings;
- Fig. 4: eine schematische perspektivische Ansicht einer weiteren Ausführungsform eines erfindungsgemäßen Prothesenrohlings;
- Fig. 5: eine schematische perspektivische Ansicht einer weiteren Ausführungsform eines erfindungsgemäßen Prothesenrohlings; und
- Fig. 6: eine schematische perspektivische Ansicht einer weiteren Ausführungsform eines erfindungsgemäßen Prothesenrohlings.

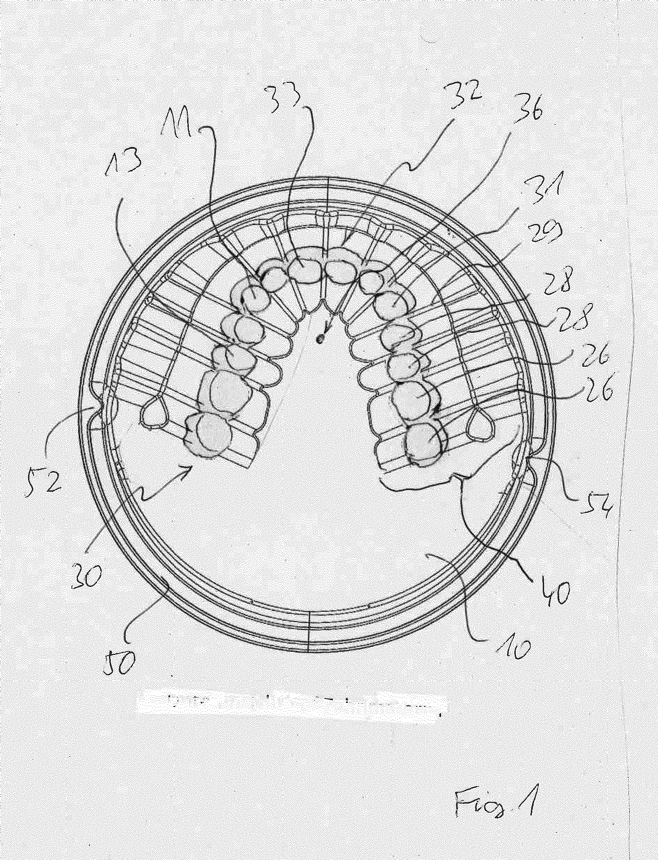

Der in Fig. 1 dargestellten Rolling 10 ist im Wesentlichen scheibenförmig ausgebildet. Der in Fig. 1 obere Bereich ist für die Realisierung eines Zahnbogen 11 bestimmt und dessen Unterseite aus Fig. 1 ersichtlich ist. Man erkennt Basalflächen 13 der einzelnen Zähne des Zahnbogens 11.

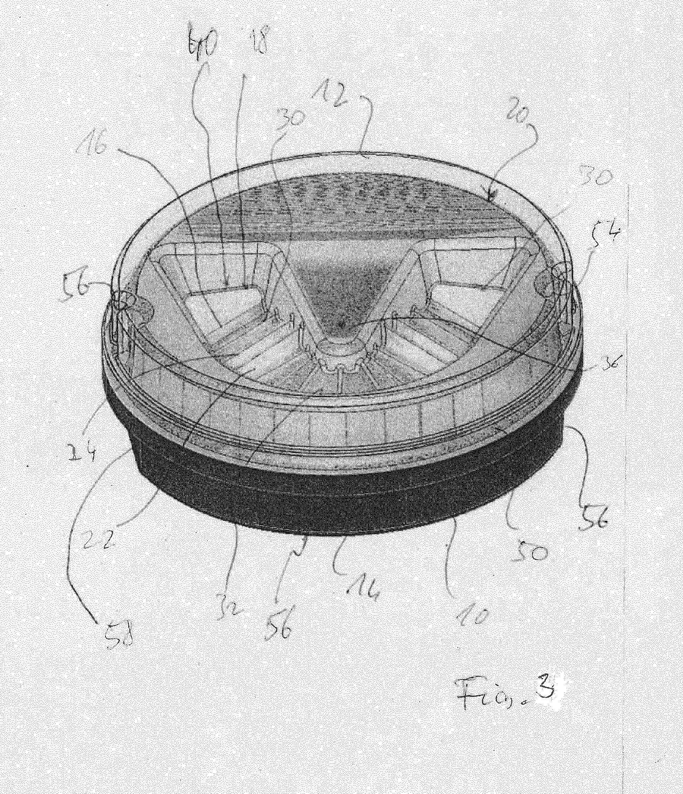

Der Rohling 10 besteht aus einer Scheibe zahnfarbenen Materials und einer Scheibe fleischfarbenen Materials, die durch Kleben oder in beliebiger geeigneter Weise miteinander verbunden sind. Die Anordnung der Materialien insofern ist besser aus Fig. 3 ersichtlich.

Zwischen den Materialien erstreckt sich eine Grenzfläche 16 mit einem wellenförmigen Verlauf. Der Verlauf ist einem menschlichen Gingivasaum nachgebildet.

Dementsprechend wechseln einander Täler 22 und Berge 24 ab, wie es aus Fig. 1 schematisch ersichtlich ist.

Die Täler 22, die Nuten entsprechen, sind dafür bestimmt, Zähne aufzunehmen , und die Berge 24, die Rippen entsprechen, bilden später die Zahnzwischenräume.

Die Grenzfläche 16 erstreckt sich über den Verlauf des Zahnbogens 11 wellenförmig. In oral-vestibuläre Richtung betrachtet hat sie einen besonderen Verlauf.

Im Bereich der Frontzähne 33 ist der Verlauf strahlenförmig, ausgehend von einem Strahlen-Mittelpunkt 36.

Hingegen ist der Verlauf der Wellenberge und Wellentäler in oral-vestibulärer Richtung betrachtet im übrigen Bereich nicht-strahlenförmig. Soweit die Molare 26 betroffen sind, erstrecken sich die Berge 24 und Täler 22 einander benachbarter Zähne parallel zueinander. Die Nuten 22 und Rippen 24 können sich aber auch um höchstens 10 Grad, insbesondere höchstens 5 Grad, von der Parallelität abweichend erstrecken.

Dies gilt auch für die Berge und Täler der Prämolaren 28.

Die Rippe 29 im Zahnzwischenraum zwischen dem Eckzahn 31 und dem ersten Prämolar 28 ist parallel zur nach distal nächstfolgenden Rippe. Sie trifft in ihrer Verlängerung jedoch fast den Strahlenmittelpunkt 36. Das Tal 22, in dem der Eckzahn 31 aufgenommen ist, ist nach außen strahlenförmig aufgeweitet, wie auch die Täler der Frontzähne 33.

Der Bereich, in dem Zahnbögen 11 erstellbar sind, ist in oral vestibulärer Richtung begrenzt. Er wird als Formgebungsbereich 40 bezeichnet.

Am Außenumfang des Rohlings 10 ist ein nach außen vorspringender Einspannrand 50 ausgebildet. Dieser dient in an sich bekannter Weise der Aufnahme des scheibenförmigen Rohlings in die Werkstückaufnahme einer Dentalfräsmaschine.

Die vom Rohling 10 gebildete Scheibe ist dem Grunde nach kreisrund. Sie weist jedoch Nuten 52 und 54 auf einer Ebene unterhalb des Einspannrandes 50 auf. Die Nuten 52 und 54 liegen einander nicht diametral gegenüber, damit ist eine Verdrehsicherung gewährleistet.

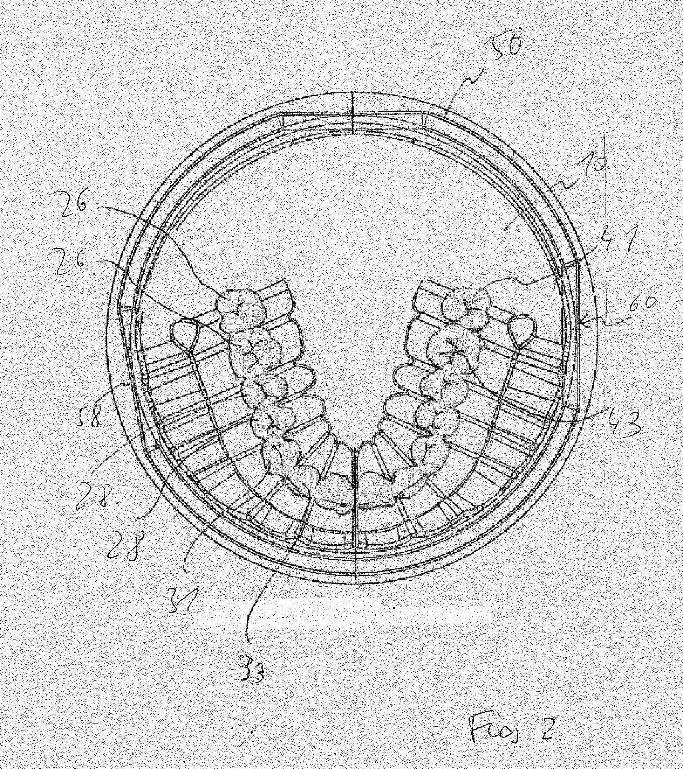

Aus Fig. 2 ist die Rohling-Scheibe gemäß Fig. 1 in der Draufsicht auf den Zahnbogen 11 ersichtlich. Gleiche Bezugszeichen weisen hier wie auch in den weiteren Figuren auf gleiche Teile hin.

Die Zähne 26, 28 und 31 sind mit ihrer Okklusionsfläche 41 ersichtlich, und es ist ersichtlich, dass beispielsweise für den Stampfhöcker 43 des ersten Molars 26 recht viel Platz zur Verfügung steht, auch wenn der Zahnbogen 11 klein gehalten ist, also nach oral verlagert ist.

Oberhalb des Einspannenrandes 50, also auf der Zahnseite der Prothese, ist eine andere Verdrehsicherung als aus Fig. 1 ersichtlich vorgesehen. Diese weist Abflachungen 58 und 60 auf, die wie die Nuten 52 und 54 asymmetrisch verteilt sind.

In Fig. 3 ist ein Rohling 10 dargestellt, der aus einem zahnfarbenen Material 12 und einem fleischfarbenen Material 14 besteht. Er ist für die Herstellung einer Unterkiefer-Dentalprothese bestimmt.

Der Rohling 10 ist im Wesentlichen scheibenförmig. Eine Grenzfläche 16 zwischen dem zahnfarbenen Material 12 und dem fleischfarbenen Material 14 ist in Fig. 3 ersichtlich. Erweist eine besonders geformte Vertiefung 18 im fleischfarbenen Material 14 auf. Von der Oberseite 20 des Rohlings 10 ausgehend erstreckt sich das Material 12 in die Vertiefung 18 hinein.

Das zahnfarbene Material 14 des Rohlings 10 hat einen Durchmesser oder eine Breite von mehr als 5 cm und insbesondere eine im wesentlichen flachzylindische Form mit einem Durchmesser/Höhen-Verhältnis von mehr als 2 zu 1, bevorzugt mehr als 3 zu 1.

Das fleischfarbene und das zahnfarbene Material 14 und 12 sind miteinander verbunden, z.B. durch Kleben, durch Polymerisieren und/oder durch einstückige Herstellung.

Die Vertiefung hat im Wesentlichen die Form eines U mit recht breiten Schenkeln, also eine Zahnbogenform. Die Grenzfläche 16 ist dort in besonderer Weise ausgebildet. Sie hat über den Verlauf des U hinweg eine Wellenform, und zwar entsprechend einem Gingivasaum, also im Wesentlichen entsprechend einer Kettenlinie.

Die Wellenform weist abwechselnd Wellentäler 22 und Wellenberge 24 auf. Die Wellentäler sind gleichzeitig auch Nuten, und die Wellenberge Rippen.

Die Spitzen der Wellenberge 24 und auch die - nach unten gewandten - Spitzen der Wellentäler 22 bilden je eine Kammlinie.

Die Kammlinien verlaufen von distal 30 nach mesial 32 ansteigend. Die Grenzfläche 16 liegt also schräg in dem Rohling 10, und ist gleichsam vorne, also im Bereich der Anterioren, höher als hinten.

Dies bezieht sich auf den durchschnittlichen Verlauf der Grenzfläche 16, die tatsächlich wie ausgeführt wellenförmig ist.

Der Schrägstellungswinkel oder die Neigung der Grenzfläche 16 liegt hier im Durchschnitt bei 16 Grad.

Im Bereich der Frontzähne oder Anterioren verlaufen die Wellenberge und Wellentäler 24 und 22 von oral nach vestibulär betrachtet strahlenförmig. Sie erstrecken sich von einem Strahlen-Mittelpunkt 36 radial ausgehend nach außen.

Hingegen verlaufen sie im Bereich der Molaren und Prämolaren parallel zueinander. Die Schenkelbreite des U, und damit die Breite der Vertiefung 18 beträgt deutlich mehr als es für die Formgebung von Zähnen erforderlich ist. Der Rohling 10 ist dafür bestimmt, sowohl große als auch kleine Zahnbögen realisieren zu können, indem Zähne radial innen, radial in der Mitte oder radial außen, bezogen auf den Mittelpunkt 36, gefräst werden.

Insofern steht die gesamte Breite des U als Formgebungsbereich 40 für die Formgebung zur Verfügung.

Wie aus Fig. 3 ersichtlich ist, ist die Vertiefung 18 deutlich tiefer im distalen Bereich 30 als im mesialen Bereich 32. Hierdurch entsteht eine deutlich größere Höhe des zahnfarbenen Materials 12 distal als mesial. Durch diese Maßnahme rückt der Frontzahnbereich 32 an die Oberseite 20 des Rohlings 10 heran, und dort erforderliche Hinterschneidungen lassen sich mit kurzen Fräsern rasch und genau fräsen.

Aus Fig. 3 ist ferner ersichtlich, dass der Rohling 10 einen umlaufenden Einspannrand 50 aufweist. Der Einspannrand 50 hat die für Dental-Scheibenrohlinge übliche Form, und der scheibenförmige Rohling 10 einen Durchmesser zwischen 95 und 100 mm.

Oberhalb des Einspannrandes 50 erstreckt sich zurückspringend zahnfarbenes Material 12. Dort sind Nuten 52 und 54 vorgesehen, die asymmetrisch zueinander angeordnet sind, also nicht diametral einander gegenüber liegen, und als Verdrehsicherung dienen.

Zur Unterseite 56 des Rohlings 10 in sind zusätzlich Abflachungen 58 und 60 ausgebildet. Diese sind im Bereich des Materials 14 vorgesehen und ebenfalls asymmetrisch zueinander. Sie dienen der alternativen Einspannung verdrehsicher in neuere Fräsmaschinen.

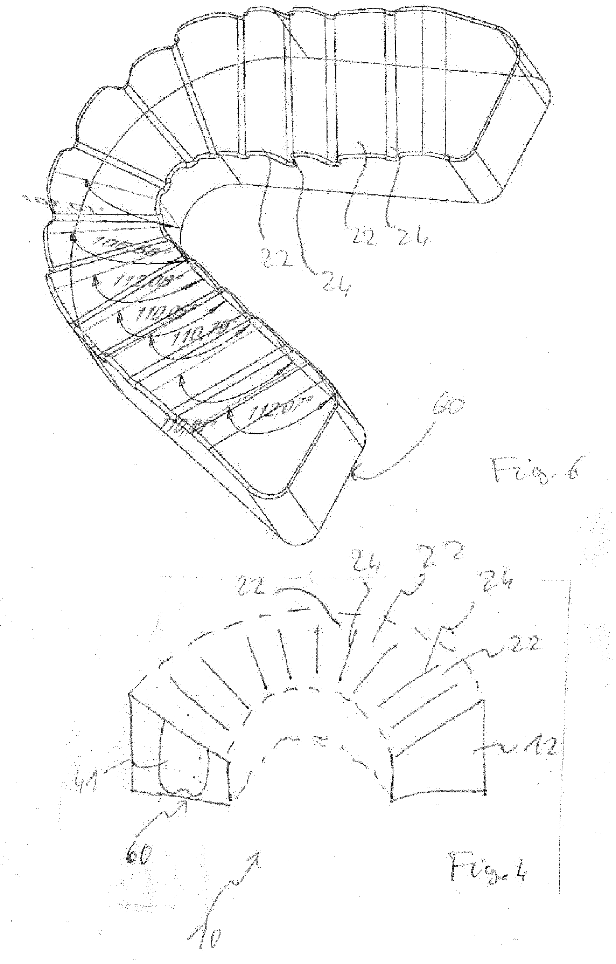

Aus Fig. 4 ist eine weitere Ausführungsform eines Rohlings 10 ersichtlich. Von dem Rohling ist lediglich das zahnfarbene Material 12 dargestellt, während die übrigen Teile sich beispielsweise gemäß Figur 3 erstrecken und ausgebildet sind.

An der in Fig. 3 unten dargestellte Seite erstreckt sich die Okklusionsebene 60. Dementsprechend ist ein Zahn 41 in Fig. 4 dergestalt in das Material 12 eingezeichnet, dass seine Okklusalseite zur Okklusionsebene 60 weist.

Im Unterschied zu den Ausführungsformen gemäß den Figuren 1 bis 3 sind in Fig. 4 die Berge, also die Rippen 24, in vestibulär-oraler Richtung geneigt, während sie sich beispielsweise gemäss Fig. 3 gerade, also parallel zur Okklusionsebene erstrecken.

Oral sind die Rippen 24 okklusionsnäher als vestibulär.

Der Winkel zwischen der Okklusionsebene 60 und und der Rippe 24 lässt sich in weiten Bereichen an die Erfordernisse anpassen. Beispielsweise kann der Winkel 10 bis um 20 Grad betragen, aber auch darüber.

Der Winkel kann auch für die einzelnen Zähne bzw Zahnzwischenräume unterschiedlich sein.

Die Berge 24 entsprechenden Zahnzwischenräumen und die Tälor 22 den Zähnen.

Die in Fig. 4 dargestellte Neigung bezieht sich sowohl auf die Berge 24 als auch auf die Täler 22.

Es hat sich gezeigt, dass durch die insofern vorgesehene Schrägstellung gerade bei großen Unterschieden zwischen Zahnbögen eine bessere Anpassung möglich ist.

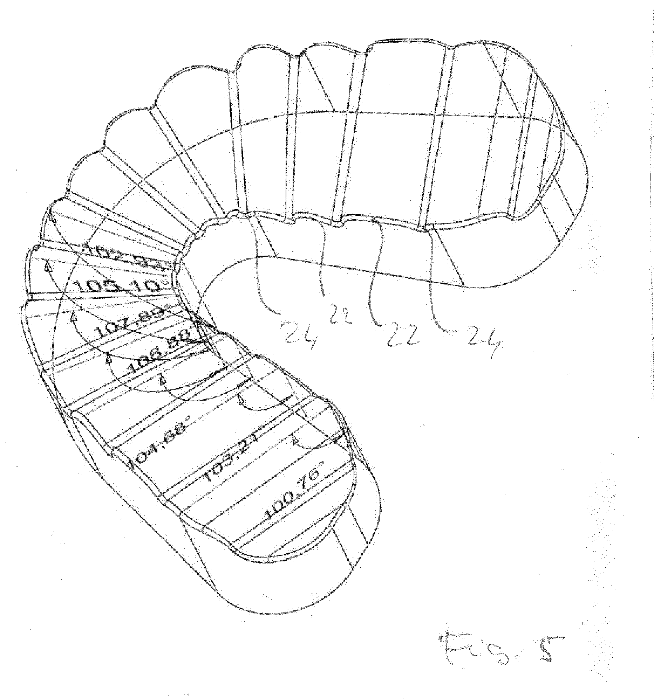

Beispielhafte Schrägstellungs-Winkel der Berge 24 sind aus Fig. 5 für den Unterkiefer und Fig. 6 sechs für den Oberkiefer ersichtlich. Die dort angegebenen Schrägstellungswinkel beziehen sich auf eine Normale zum Rohling, der scheibenförmig ausgebildet ist.

Bezogen auf die Okklusionsebene 60 sind die Winkel für den Unterkiefer gemäß Fig. 5 zwischen 10 Grad und 19 Grad und für den Oberkiefer zwischen 15 Grad und 23 Grad.

Es versteht sich, dass Anpassungen der Winkel und auch des Verlaufs der Kammlinie über den Zahnbogen betrachtet in weiten Bereichen je nach Erfordernis möglich sind.

## Patentansprüche

1. Rohling für die Herstellung einer Dentalprothese, der aus einem fleischfarbenen Material (14) und einem zahnfarbenen Material (12), insbesondere je auf Kunststoffbasis, aufgebaut ist, welche Materialien (12, 14) durch Kleben, durch Polymerisieren, durch Spritzgießen und/oder durch einstückige Herstellung miteinander verbunden sind, wobei die Grenzfläche (16) zwischen den Materialien - im Zahnbogenverlauf betrachtet - wellenförmig mit einander abwechselnden Nuten (22) und Rippen (24) und im Bereich der zu erstellenden Frontzähne (33) - in oral-vestibulärer Richtung betrachtet - strahlenförmig ausgebildet ist, **dadurch gekennzeichnet, dass**
die Grenzfläche (16) im Bereich der Molare (26) und im Bereich der Prämolare (28) - in oral-vestibulärer Richtung betrachtet - zueinander parallele Nuten (22) und Rippen (24), die Täler und Berge der Wellenform bilden, aufweist.

2. Rohling nach Anspruch 1, **dadurch gekennzeichnet, dass** im Bereich der Molaren (26) und im Bereich der Prämolaren (28) vorgesehene zueinander parallele Nuten (22) und Rippen (24) sich je mit einer Länge von mindestens 2 cm von oral nach vestibulär erstrecken.

3. Rohling nach Anspruch 1 oder 2, **dadurch gekennzeichnet, dass** die Breite der Täler (22) je an die Breite des je zu erzeugenden Zahnes angepasst ist und insbesondere das Tal (22) für den ersten Molar (26) die größte Talbreite aufweist.

4. Rohling nach einem der vorhergehenden Ansprüche, **dadurch gekennzeichnet, dass** die Berge (24) und Täler (22) über einen sich von oral nach vestibulär erstreckenden Formgebungsbereich (40) die gleiche Form aufweisen oder zumindest kongruent bleiben.

5. Rohling nach einem der vorhergehenden Ansprüche, **dadurch gekennzeichnet, dass** die Berge (24) über den Verlauf des Zahnbogens (11) eine Kammlinie bilden, die gegen die Okklusionsebene und insbesondere gegen die den Zähnen benachbarte Seite des Rohlings (10) geneigt ist.

6. Rohling gemäß Anspruch 5, **dadurch gekennzeichnet, dass** die Kammlinie aus vestibulärer Richtung betrachtet gerade, gekrümmt, S-förmig oder gemäß der Spee-Kurve verläuft, dies mindestens teilweise, insbesondere aber vollständig

7. Rohling nach einem der vorhergehenden Ansprüche, **dadurch gekennzeichnet, dass** die Berge (24) aus vestibulärer und in oraler Richtung betrachtet abfallend, also sich der Okklusionsebene (60) annähernd, insbesondere in einem Winkel von 10 bis 40 Grad, bevorzugt zwischen 15 und 25 Grad verlaufen.

8. Rohling gemäß Anspruch 5, **dadurch gekennzeichnet, dass** der Rohling (10) eine Grenzfläche (16) aufweist, die zur Okklusionsebene geneigt ist und distal eine größere Höhe des den Zähnen entsprechenden Materials als mesial hat

9. Rohling nach einem der vorhergehenden Ansprüche, **dadurch gekennzeichnet, dass** ein Übergangsbereich zwischen dem Bereich der Molare (26) und dem Bereich der Frontzähne (33) vorgesehen ist, in welchem die Form der Berge (24) und Täler (22) von parallel zu strahlenförmig übergeht.

10. Rohling nach einem der vorhergehenden Ansprüche, **dadurch gekennzeichnet, dass** das zahnfarbene Material (12) des Rohlings (10) im Rohlingzustand einen Durchmesser oder eine Breite von mehr als 5 cm und insbesondere eine flachzylindische Form mit einem Durchmesser/Höhen-Verhältnis von mehr als 2 zu 1, bevorzugt mehr als 3 zu 1, aufweist.

11. Rohling nach einem der vorhergehenden Ansprüche, **dadurch gekennzeichnet, dass** eine zusätzliche Schicht aus einem Material mit abweichenden lichtbrechenden Eigenschaften, insbesondere aufgrund unterschiedlicher Brechungsindices dieses Materials gegenüber dem fleischfarbenen und dem zahnfarbenen Material (14,12), zwischen dem zahnfarbenen und dem fleischfarbenen Material angeordnet ist.

12. Rohling nach einem der vorhergehenden Ansprüche, **dadurch gekennzeichnet, dass** die die Prämolare (28) oder mindestens die den zweiten. Pramolaren begrenzenden Rippen (24) prägnanter als die die Molaren oder mindestens die den zweiten. Molar begrenzenden Rippen (24) ausgebildet sind.

## Claims

1. A blank for the manufacture of a dental prosthesis, the blank being formed from a flesh-colored material (14) and a tooth-colored material (12), in particular each based on plastics material, which materials (12, 14) are joined to one another by bonding, by polymerization, by injection molding and/or by monobloc production, wherein the boundary surface (16) between the materials, as viewed in the course of the dental arch, is wave-shaped having mutually alternating grooves (22) and ribs (24) in the region of the anterior teeth (33) to be produced, and as viewed in the oral-vestibular direction, is radially formed, **characterized in that** the boundary surface (16), at least in the region of the molars (26) and in the region of the premolars (28) - as viewed in an oral-vestibular direction - has grooves (22) and ribs (24) parallel to each other, which form crests and troughs of the waveform.

2. The blank according to claim 1, **characterized in that** mutually parallel grooves (22) and ribs (24) are provided in the region of the molars (26) and in the region of the premolars (28), each one extending with a length of at least 2 cm from the oral oral to vestibular direction.

3. The blank according to claim 1 or 2, **characterized in that** the width of the troughs (22) is adapted to the respective width of the respective tooth to be produced and it is especially the trough (22) for the first molar (26) which has the largest trough width.

4. The blank according to one of the preceding claims, **characterized in that** the crests (24) and troughs (22) have the same shape or at least remain congruent across a shaping region (40) extending from the oral to vestibular direction.

5. The blank according to one of the preceding claims, **characterized in that** the crests (24), over the course of the dental arch (11), form a ridge line which is inclined towards the plane of occlusion and in particular towards the side of the blank (10) adjacent to the teeth.

6. The dental prosthesis according to claim 5, **characterized in that** the ridge line, as viewed from the vestibular direction, extends in a straight, curved, S-shaped manner or according to the curve of Spee, and this at least partially, but in particular completely

7. The blank according to one of the preceding claims, **characterized in that** the crests (24,) as viewed from vestibular and towards oral direction, extend sloping downwards, i.e. approaching the occlusion plane (60), in particular at an angle of 10 to 40 degrees, preferably between 15 and 25 degrees.

8. The blank according to claim 5, **characterized in that** the blank (10) has a boundary surface (16) which is inclined towards the occlusal plane and has a greater height of the material corresponding to the teeth in the distal direction than in the mesial direction.

9. The blank according to one of the preceding claims, **characterized in that** a transition region is provided between the region of the molars (26) and the region of the anterior teeth (33), in which the shape of the crests (24) and troughs (22) merges from parallel into radial.

10. The blank according to one of the preceding claims, **characterized in that** the tooth-colored material (12) of the blank (10) in the blank state has a diameter or a width of more than 5 cm and in particular a flat cylindrical shape having a diameter/height ratio of more than 2 to 1, preferably more than 3 to 1.

11. The blank according to one of the preceding claims, **characterized in that** an additional layer of a material having different refractive properties, in particular due to different refractive indices of this material as compared to the flesh-colored and the tooth-colored material (14, 12), is arranged between the tooth-colored and the flesh-colored material.

12. The blank according to one of the preceding claims, **characterized in that** the ribs (24) limiting the premolars or limiting at least the second premolar are formed such that they are formed more pronounced than those ribs (24) limiting the molars or limiting at least the second molar.

## Revendications

1. Lingotin pour la fabrication d'une prothèse dentaire, qui est composée d'un matériau de couleur chair (14) et d'un matériau de couleur dent (12), en particulier chacun à base de matière plastique, lesquels matériaux (12, 14) sont reliés entre eux par collage, par polymérisation, par moulage par injection et/ou par fabrication en une seule pièce, où l'interface (16) entre les matériaux - vue dans le sens de l'arcade dentaire - est en forme de vague avec des rainures (22) et des nervures (24) alternées et dans la région des dents antérieures (33) à produire - vue dans le sens bucco-vestibulaire - est en forme de rayons, **caractérisé en ce que** l'interface (16) dans la région des molaires (26) et dans la région des prémolaires (28) - vue dans le sens bucco-vestibulaire - présente des rainures (22) et des nervures (24) mutuellement parallèles qui forment des vallées et des pics de la forme d'onde.

2. Lingotin selon la revendication 1, **caractérisée en ce que**, dans la région des molaires (26) et dans la région des prémolaires (28), des rainures (22) et des nervures (24) parallèles prévues s'étendent chacune sur une longueur d'au moins 2 cm de la partie orale à la partie vestibulaire.

3. Lingotin selon la revendication 1 ou 2, **caractérisée en ce que** la largeur des vallées (22) est adaptée à la largeur de la dent à produire et en particulier la vallée (22) pour la première molaire (26) présente la plus grande largeur de vallée.

4. Lingotin selon l'une des revendications précédentes, **caractérisé en ce que** les crêtes (24) et les vallées (22) ont la même forme ou au moins restent congruents sur une zone de façonnage (40) s'étendant de l'oral au vestibulaire.

5. Lingotin selon l'une des revendications précédentes, **caractérisée en ce que** les crêtes (24) forment, sur le parcours de l'arcade dentaire (11), une ligne de crête inclinée vers le plan d'occlusion et, en particulier, vers le côté du lingotin (10) adjacent aux dents.

6. Lingotin selon la revendication 5, **caractérisé en ce que** la ligne de crête, vue depuis la direction vestibulaire, est droite, incurvée, en forme de S ou selon la courbe de Spee, ceci au moins partiellement, mais en particulier complètement.

7. Lingotin selon l'une des revendications précédentes, **caractérisé en ce que** les crêtes (24), vues dans le sens vestibulaire et dans le sens oral, sont inclinées vers le bas, c'est-à-dire se rapprochent du plan d'occlusion (60), en particulier selon un angle compris entre 10 et 40 degrés, de préférence entre 15 et 25 degrés.

8. Lingotin selon la revendication 5, **caractérisée en ce que** l'ébauche (10) présente une interface (16) qui est inclinée par rapport au plan occlusal et présente distalement une plus grande hauteur du matériau correspondant aux dents que mésialement.

9. Lingotin selon l'une des revendications précédentes, **caractérisée en ce qu'**une région de transition est prévue entre la région des molaires (26) et la région des dents antérieures (33), dans laquelle la forme des pics (24) et des vallées (22) passe de parallèle à sous forme de rayons.

10. Lingotin selon l'une des revendications précédentes, **caractérisé en ce que** le matériau de couleur dent (12) du lingotin (10) à l'état de lingotin présente un diamètre ou une largeur de plus de 5 cm et en particulier une forme cylindrique plate avec un rapport diamètre/hauteur de plus de 2 à 1, de préférence de plus de 3 à 1.

11. Lingotin selon l'une quelconque des revendications précédentes, **caractérisé en ce qu'**une couche supplémentaire d'un matériau ayant des propriétés de réfraction différentes, notamment en raison d'indices de réfraction différents de ce matériau par rapport au matériau couleur chair et au matériau couleur dent (14, 12), est disposée entre le matériau couleur dent et le matériau couleur chair.

12. Lingotin selon l'une des revendications précédentes, **caractérisée en ce que** les nervures (24) délimitant les prémolaires (28) ou au moins les nervures (24) délimitant les secondes prémolaires sont formées de manière plus concise que les nervures (24) délimitant les molaires ou au moins les nervures (24) délimitant la seconde molaire.
